# FASCICULE DE BREVET EUROPEEN

(11) **EP 0 366 577 B1**
(45) Date de publication et mention de la délivrance du brevet: **25.05.1994**
(21) Numéro de dépôt: 89420419.7
(22) Date de dépôt: 26.10.1989
(51) Int. Cl.: B60P 3/40

(54) **Dispositif à chassis amovible pour le transport de charges longues**
Vorrichtung mit auswechselbarem Gestell für den Transport von langen Lasten
Device with a detachable frame for transporting long loads

(30) Priorité: 28.10.1988 FR 8814964
(43) Date de publication de la demande: 02.05.1990
(73) Titulaire: TRANSPORTS BOGEAT DANIEL, 73420 Voglans (FR)
(72) Inventeur: Bogeat, Daniel, F-73239 Saint Alban Leysse (FR)
(74) Mandataire: de Beaumont, Michel

(56) Documents cités:
- AU-B- 4 669 568
- US-A- 2 900 198
- US-A- 3 087 744
- US-A- 4 750 785

## Description

La présente invention concerne le transport de charges longues, c'est-à-dire de charges dont la longueur excède la longueur maximale admissible sur les véhicules traditionnels de type semi-remorque.

Les normes actuellement en vigueur concernant le transport routier par véhicules articulés de type tracteur et semi-remorque limitent à 15,50 mètres la longueur hors tout du véhicule entier. Il en résulte que, dans le meilleur des cas, la longueur utile sur la semi-remorque est de 13,60 mètres environ. Cette longueur ne permet donc pas de transporter librement des charges longues telles que les nouveaux conteneurs américains de grande longueur aux normes APL de 45 pieds ou 48 pieds.

Par ailleurs, les normes actuellement en vigueur relatives au transport routier par véhicules articulés de type camion tractant une remorque imposent que la longueur totale du véhicule soit inférieure ou égale à 18 mètres. A priori, cette longueur est donc supérieure à celle autorisée pour les véhicules de type articulé avec tracteur et semi-remorque, mais la charge est alors scindée en deux parties, une première partie sur le camion, une seconde partie sur la remorque. Il en résulte que ce type de transporteur ne permet pas non plus de porter librement les nouveaux conteneurs américains de grande longueur.

Le transport des charges plus longues que celles indiquées ci-dessus nécessite l'obtention préalable d'une autorisation de transport exceptionnel. Pour le transport de telles charges, diverses structures de transport ont été proposées. Par exemple, le document US-A-4 750 785 décrit une structure dans laquelle une poutre de grande longueur à transporter est posée sur une semi-remorque dont la longueur est réglable. L'usage de la semi-remorque pour des longueurs dépassant 13,60 mètres requiert donc les autorisations administratives de transport exceptionnel. Il en est de même du dispositif décrit dans le document US-A-2 900 198. Le document US-A-3 087 744 décrit une structure comprenant un semi-remorque double avec une première semi-remorque accrochée derrière un camion tracteur, et une seconde semi-remorque accrochée à l'arrière de la première semi-remorque. Cette structure ne résoud pas le problème des longueurs maximales autorisées pour les semi-remorques.

La présente invention a notamment pour objet de permettre le transport routier de charges plus longues que celles qui sont permises par les véhicules articulés de type tracteur et semi-remorque, en concevant une nouvelle structure porteuse permettant de transporter une charge longue monobloc tout en bénéficiant de la norme de longueur de 18 mètres applicable aux ensembles de véhicules constitués d'un camion et d'une remorque.

Un autre but de l'invention est de permettre le transport de telles charges longues sous forme de conteneurs de grande longueur, par exemple des conteneurs dits de 45 pieds, de 48 pieds, ou même de 53 pieds, longueurs de conteneurs existant aux U.S.A.

Un autre but de l'invention est de concevoir une telle structure porteuse qui est compatible avec la norme d'encombrement en virage que l'on appelle "anneau européen", selon laquelle le véhicule doit pouvoir passer sur une surface en anneau dont le rayon intérieur est de 5,30 mètres et le rayon extérieur est de 12,50 mètres. On conçoit que, plus la charge est longue, plus cette norme est difficile à respecter.

Un autre objet de l'invention est de faciliter considérablement le chargement et le déchargement de la charge longue sur le véhicule.

La structure selon l'invention permet un débattement relativement important, en hauteur et en orientation, des chassis routiers supports de roues par rapport à la charge, de sorte que le dispositif permet le transport routier sur des configurations de terrains difficiles, telles que bosses, creux, inclinaisons latérales. La charge se trouve maintenue efficacement, et des moyens évitent les oscillations latérales de la charge.

Un autre objet de l'invention est d'assurer une continuité entre les transports maritimes, ferroviaires et routiers, en utilisant la même base de chargement, donc en laissant à l'expéditeur ou au transporteur le libre choix du mode de transport après l'opération de chargement.

Pour atteindre ces buts ainsi que d'autres, le dispositif pour le transport de charges longues selon la présente invention comprend, dans sa version adoptée au transport routier :
- un camion moteur qui comporte un chassis et au moins deux essieux dont au moins un est moteur, et qui comporte les éléments de commande et la source d'énergie ;
- une première tourelle à axe de rotation sensiblement vertical dont une partie inférieure est fixée sur la partie arrière du châssis de camion, et dont la partie supérieure tourillonne librement sur la partie inférieure ;
- une remorque, comportant au moins un essieu ;
- des moyens de liaison mécanique pour relier le camion et la remorque ;
- les moyens de liaison mécanique comprennent un timon téléscopique de longueur variable, fixé à sa première extrémité à la remorque selon une fixation interdisant tout pivotement du timon par rapport à la remorque autour d'un axe vertical, et articulé, à sa seconde extrémité, au châssis de camion par un crochet d'attelage, de sorte que le timon télescopique de longueur variable commande la direction de la remorque et autorise un libre écartement longitudinal de la remorque par rapport au camion ;
- la première tourelle porte un premier berceau d'accrochage, articulé sur la partie supérieure de tourelle selon un axe horizontal destiné à être positionné transversalement par rapport à la direction générale de déplacement du dispositif ;
- le premier berceau d'accrochage comporte des moyens pour recevoir et retenir la portion antérieure d'un châssis amovible porte-charges ;
- la remorque comprend un second berceau d'accrochage similaire au premier berceau d'accrochage, monté de manière similaire sur une seconde tourelle à axe de rotation vertical, et muni de moyens pour recevoir et retenir la portion postérieure d'un châssis amovible porte-charges ;
- un châssis amovible porte-charges est porté et retenu respectivement à sa portion antérieure par le premier berceau d'accrochage et à sa portion postérieure par le second berceau d'accrochage, de sorte que le châssis amovible porte-charges assure lui-même la traction de la remorque sans influer sur sa direction.

La structure ainsi définie permet de recevoir et de maintenir, par ses deux zones extrêmes, un châssis amovible porte-charges. Le timon, de longueur essentiellement variable, commande la direction de la remorque, et autorise un libre écartement longitudinal de la remorque par rapport au camion ; simultanémenent, le châssis porte-charges, qui est retenu par ses deux extrémités d'une part au camion et d'autre part à la remorque, assure par lui-même la traction de la remorque sans influer sur sa direction. On comprend ainsi que l'ensemble formé par la remorque et le camion est un ensemble de type camion-remorque, pour lequel les normes autorisent une longueur totale de 18 mètres. La charge, fixée sur le châssis porte-charges, peut donc occuper en une seule partie la presque totalité de la longueur utile, à l'exception de la longueur réservée à la cabine et éventuellement à la couchette disposée à l'arrière de la cabine. Lorsqu'on prévoit d'utiliser une couchette, la longueur totale de la charge peut être de 15,25 mètres environ. Si l'on supprime la couchette, on peut arriver jusqu'à une longueur de 16,15 mètres environ.

Selon un mode particulier de réalisation, la partie supérieure de tourelle de camion qui porte le berceau d'accrochage peut en outre admettre des mouvements d'oscillation latérale d'axe longitudinal et d'amplitude limitée de part et d'autre du plan vertical longitudinal médian par rapport à la partie inférieure de tourelle. La tourelle de la remorque est, au contraire, dépourvue de cette faculté d'oscillation latérale, pour assurer la stabilisation latérale de la charge. Une telle structure est adaptée à une utilisation en tous terrains, mais devrait en principe être évitée pour une utilisation sur route. En effet, sur route et à vitesse normale, il est préférable de prévoir deux tourelles sans aptitude à oscillations latérales.

De préférence, le châssis amovible porte-charges est pourvu à ses deux extrémités de moyens d'accrochage déverrouillables coopérant avec les berceaux d'accrochage du camion et de la remorque. On peut ainsi solidariser ou désolidariser à volonté le châssis amovible et les berceaux d'accrochage.

De préférence, la remorque comporte au moins deux essieux, de façon à assurer une bonne stabilité de la charge en oscillation latérale. Cette caractéristique est particulièrement utile dans les modes de réalisation dans lesquels la partie supérieure de première tourelle de camion peut osciller latéralement par rapport à la partie inférieure de ladite tourelle.

Selon un mode de réalisation, les moyens pour recevoir et retenir la portion d'extrémité de châssis amovible sur un berceau d'accrochage comprennent :
- une partie centrale de berceau d'accrochage conformée pour recevoir et retenir un pivot d'attelage, cette partie centrale pouvant par exemple être conformée de manière similaire à une sellette de tracteur de semi-remorque ;
- une première et une seconde parties latérales, disposées transversalement de part et d'autre de la partie centrale, et munies de moyens d'accrochage et de solidarisation du châssis amovible.

Par exemple, le berceau d'accrochage comporte une partie centrale conformée en sellette de tracteur de semi-remorque, prolongée latéralement par deux parties latérales comportant chacune un verrou d'arrimage vertical, tel qu'un verrou selon la norme NF H 90-005, compatible avec une pièce de coin solidaire du chassis amovible porte-charges.

Le timon télescopique comprend avantageusement des moyens de verrouillage déverrouillables, pour fixer, par verrouillage, la longueur du timon à une valeur déterminée et permettre ainsi la traction à vide de la remorque accrochée derrière le camion par le timon, en l'absence de chassis porte-charges. En déverrouillant le timon, on autorise le libre coulissement des éléments télescopiques de timon et l'adaptation permanente de sa longueur en fonction de la longueur de la charge et en fonction du rayon de courbure de virage négocié par le dispositif.

De préférence, le timon comprend en outre des butées de fin de course, limitant sa longueur en-deçà d'une valeur maximale déterminée.

D'autres objets, caractéristiques et avantages de la présente invention ressortiront de la description suivante de modes de réalisation particuliers, faite en relation avec les figures jointes, parmi lesquelles :
- la figure 1 représente une vue générale de côté d'un dispositif de transport selon la présente invention, dans sa version routière ;
- la figure 2 est une vue de côté du détail de réalisation des moyens d'accrochage du chassis porte-charges sur un chassis de camion ;
- la figure 3 est une vue de dessus du dispositif de la figure 2 ;
- la figure 4 est une vue d'arrière du dispositif de la figure 2 ;
- la figure 5 est une vue de dessus d'une remorque selon la présente invention ;
- la figure 6 est une vue de côté d'un chassis amovible porte-charges selon l'invention ;
- la figure 7 est une vue de dessous du chassis de la figure 6 ; et
- les figures 8 et 9 représentent deux coupes transversales G-G et H-H du chassis amovible porte-charges.

Comme le représentent les figures, dans sa version routière, le dispositif selon l'invention comprend de façon générale un camion 1, une remorque 2, un chassis porte-charges 3, et un timon 4 télescopique.

Le camion 1 comporte un chassis 5 et au moins deux essieux 6 et 7, au moins un des essieux tel que l'essieu 7 étant moteur. On peut de préférence utiliser un camion à trois essieux. Le camion 1 comporte les éléments de commande et la source d'énergie habituels.

La remorque 2 comprend un chassis de remorque 8 et au moins un essieu. De préférence, la remorque 2 comprend deux essieux 9 et 10, tels que le représentent les figures.

Le chassis porte-charges 3 est une structure rigide allongée, présentant une surface supérieure de préférence plane pour recevoir une charge, et comportant à chacune de ses extrémités antérieure 11 et postérieure 12 des moyens d'articulation antérieurs 13 et postérieurs 14 pour s'articuler respectivement d'une part sur le chassis 5 de camion 1 et d'autre part sur le chassis 8 de la remorque 2.

Les moyens d'articulation antérieurs 13 autorisent le libre pivotement du chassis porte-charges 3 par rapport au chassis 5 de camion 1 autour d'un axe sensiblement vertical A - A, tout en interdisant toute translation de l'extrémité antérieure 11 du chassis porte-charges 3 par rapport au camion dans le sens vertical, dans le sens horizontal longitudinal et dans le sens longitudinal transversal.

De même, les moyens d'articulation postérieurs 14 entre l'extrémité postérieure 12 du chassis porte-charges 3 et la remorque 2 autorisent un libre pivotement de l'extrémité 12 du chassis porte-charges 3 par rapport à la remorque 2 autour d'un axe sensiblement vertical B - B, tandis que ces mem'es moyens d'articulation 14 interdisent toute translation de l'extrémité postérieure 12 du chassis porte-charge 3 par rapport à la remorque 2 dans le sens vertical, dans le sens longitudinal et dans le sens transversal du dispositif.

De préférence, le chassis amovible porte-charges 3 a une longueur telle que la longueur totale du dispositif ne dépasse pas les cotes d'un ensemble de véhicules routiers autorisé par les normes en vigueur.

Le timon télescopique 4 est constitué de plusieurs segments pouvant coulisser les uns sur les autres, définissant une structure rectiligne de longueur essentiellement variable. L'extrémité antérieure 15 du timon 4 s'articule sur le chassis 5 de camion selon un crochet d'attelage 16 autorisant le libre pivotement du timon 4 par rapport au chassis 5 de camion dans toutes les directions dans le demi-plan arrière du camion. L'extrémité postérieure 17 du timon 4 est fixée à la partie antérieure du chassis 8 de remorque 2. Une première possibilité consiste à prévoir une fixation rigide, interdisant tout débattement du timon 4 par rapport à la remorque 2. Une seconde possibilité consiste à prévoir une articulation d'axe horizontal transversal F - F du timon 4 sur la remorque 2, autorisant un débattement du timon 4 dans le plan vertical longitudinal médian du dispositif par rapport à la remorque 2, mais interdisant tout débattement de part et d'autre du plan vertical longitudinal médian, de sorte que l'orientation de la remorque 2 lors d'un virage est commandée par le timon 4.

Les moyens d'articulation 13 et 14 autorisent en outre une oscillation en rotation d'axe horizontal transversal du chassis porte-charge 3 par rapport au chassis 5 de camion 1 et au chassis 8 de remorque 2.

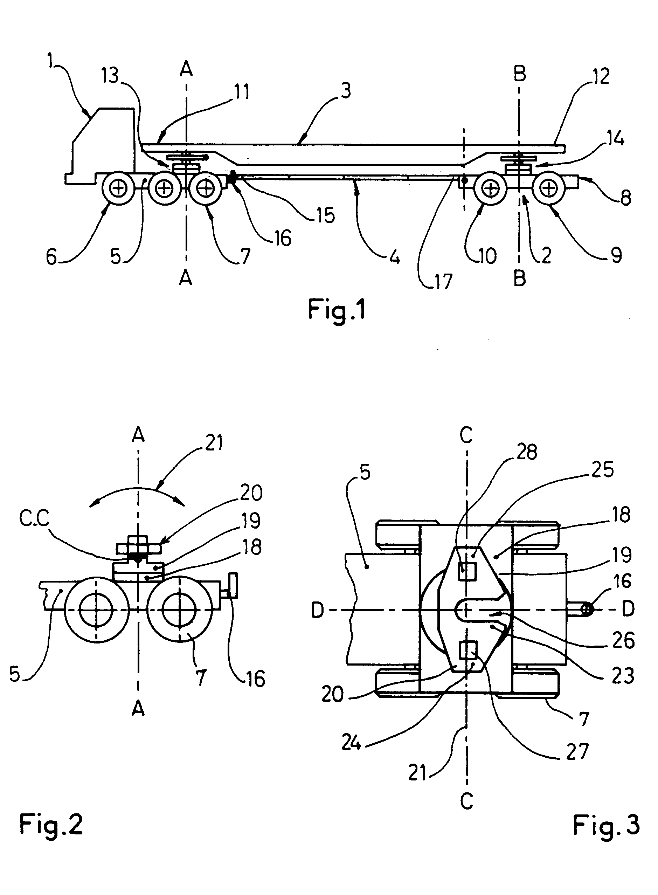

Dans le mode de réalisation représenté sur les figures 2 et 3, les moyens de liaison et d'articulation du chassis porte-charges sur le camion comprennent une première tourelle à axe de rotation sensiblement vertical A - A, formée d'une partie inférieure 18 fixée sur la partie arrière du chassis 5 de camion, et formée d'une partie supérieure 19 tourillonnant librement sur la partie inférieure 18 à laquelle elle est reliée par des moyens de guidage autorisant sa rotation libre selon l'axe vertical A - A. La partie supérieure 19 de tourelle porte un premier berceau d'accrochage 20, articulé sur ladite partie supérieure 19 de tourelle selon un axe de rotation horizontal C - C. L'axe de rotation horizontal C - C est destiné à être positionné transversalement par rapport à la direction générale de déplacement du dispositif, comme le représentent les figures. L'axe de rotation C - C autorise le libre pivotement du premier berceau d'accrochage 20 sur la partie supérieure 19 de tourelle comme le représente la double flèche 21.

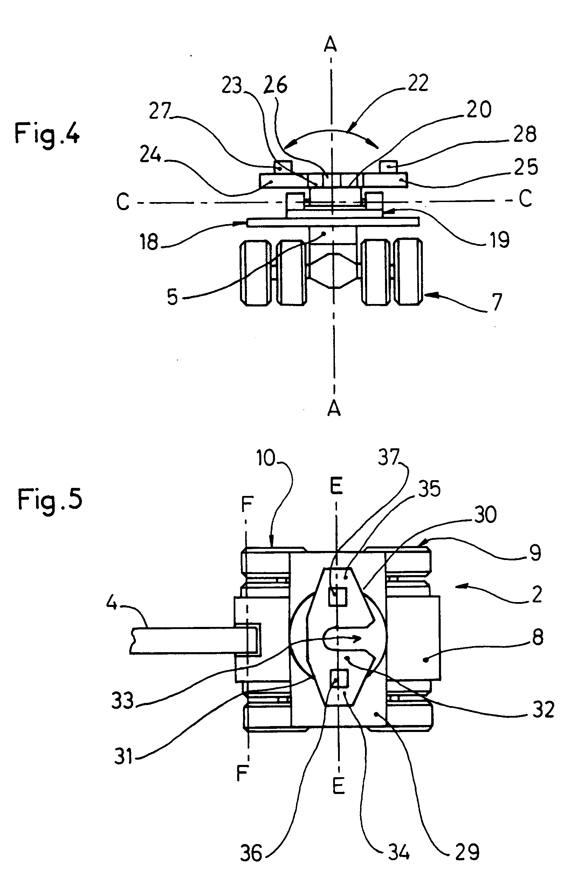

Dans les modes de réalisation particuliers pour utilisation en terrain accidenté, la première tourelle de camion 18-19 comporte en outre des moyens d'articulation de sa partie supérieure 19 par rapport à sa partie inférieure 18 autorisant des mouvements d'oscillation en rotation latérale d'axe longitudinal D - D de la partie supérieure 19 sur la partie inférieure 18, les oscillations en rotation latérale étant d'amplitude limitée de part et d'autre du plan vertical longitudinal médian, et étant représentées par la double flèche 22 sur la figure 4.

Le premier berceau d'accrochage 20 comprend une partie centrale 23 conformée en sellette de tracteur de semi-remorque, prolongée par deux parties latérales 24 et 25, définissant une sellette allongée transversalement. La partie centrale 23 est une plaque support horizontale munie d'une fente postérieure 26 et de moyens de verrouillage fermant la fente 26 pour recevoir et retenir un pivot d'attelage de semi-remorque. Les parties latérales 24 et 25 du berceau d'accrochage 20 comportent chacune, en zone intermédiaire, au moins un verrou d'arrimage 27 et 28 vertical compatible avec une pièce de coin solidaire du chassis amovible porte-charge 3. Les verrous d'arrimage peuvent par exemple être conformes à la norme NF H 90-005 relative à l'arrimage des caisses mobiles sur un chassis porteur. Les verrous d'arrimage 27 et 28 sont disposés symétriquement de part et d'autre de la fente 26, selon un écartement choisi avantageusement pour être inférieur à l'écartement des roues de camion. On peut, par exemple, les disposer au quart et aux trois quarts de la largeur du camion.

Sur la figure 5, on a représenté schématiquement, en vue de dessus, une remorque 2 selon l'invention. La remorque 2 comprend le chassis 8, à deux essieux 9 et 10, chassis sur lequel est fixée la partie inférieure 29 d'une seconde tourelle à axe de rotation sensiblement vertical B - B. La partie supérieure 30 de seconde tourelle tourillonne librement sur la partie inférieure 29 de tourelle selon des moyens de guidage autorisant sa rotation libre selon l'axe vertical B - B. La partie supérieure 30 de tourelle porte un second berceau d'accrochage 31 similaire au premier berceau d'accrochage 20. Le second berceau d'accrochage 31 comporte une partie centrale 32 conformée en sellette de semi-remorque, avec une fente centrale 33 dirigée vers l'arrière du dispositif, et avec des moyens de verrouillage pour recevoir et retenir un pivot d'attelage de semi-remorque. La partie centrale 32 est solidaire de deux parties latérales 34 et 35 munies de verrous d'arrimage 36 et 37 en zones intermédiaires. Le second berceau d'accrochage 31 peut pivoter librement sur la partie supérieure 30 de tourelle selon un axe horizontal E - E destiné à être disposé selon une orientation transversale par rapport au sens de déplacement du dispositif, comme le représente la figure 5.

Dans les modes de réalisation dans lesquels la remorque comprend deux essieux, la tourelle de remorque est avantageusement disposée entre les deux essieux. Il est alors préférable d'utiliser simultanément un camion à trois essieux, en disposant la tourelle de camion entre les deux essieux arrières. De cette manière, on garantit la possibilité d'interchangeabilité entre l'avant et l'arrière du chassis amovible, en équilibrant le dépassement du chassis de part et d'autre des pivots.

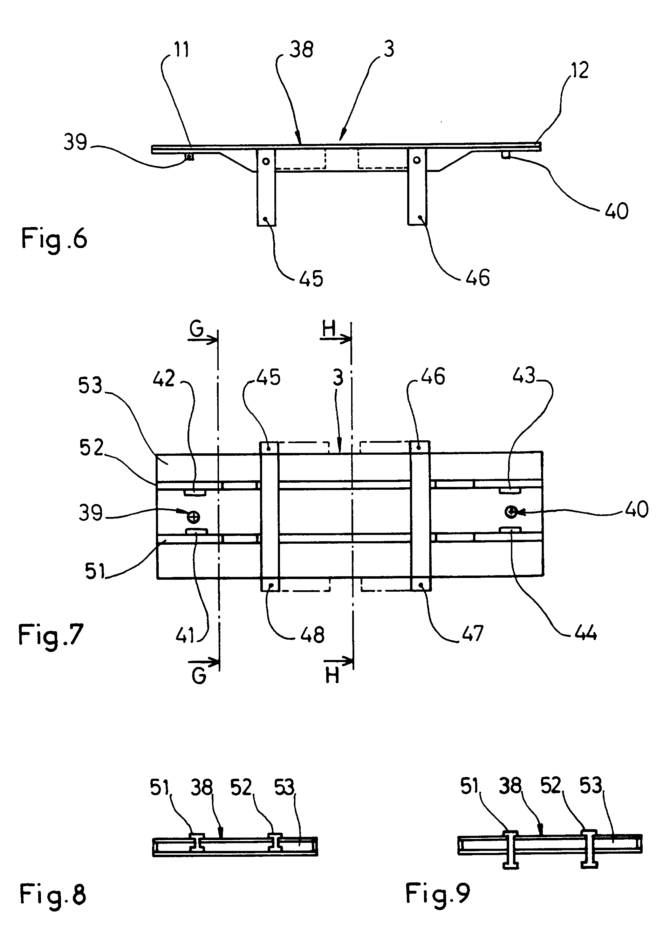

Comme le représentent les figures 6 à 9, le chassis porte-charges 3 comporte une structure rigide, par exemple en échelle, dont la face supérieure 38 est de préférence plane pour recevoir une charge telle qu'un conteneur de grande longueur.

Par exemple, le chassis porte-charges 3 peut comprendre deux longerons principaux 51 et 52 décalés symétriquement de part et d'autre de l'axe longitudinal médian du chassis, constitués chacun d'un profilé à section en I. Les longerons 51 et 52 sont disposés par exemple au quart et aux trois quarts de la largeur du chassis. Un plateau 53 est solidaire des longerons, et peut comprendre des traverses non représentées sur les figures.

Les extrémités antérieure 11 et postérieure 12 du chassis porte-charges 3 sont toutes deux formées en col de cygne, de manière similaire à la partie antérieure d'une semi-remorque, comme le représente la figure 6. On définit ainsi une structure permettant de porter une charge de grande longueur tout en étant maintenue seulement par ses deux extrémités 11 et 12, la partie centrale du chassis porte-charges 3 ayant une plus grande hauteur pour supporter les contraintes mécaniques, et les parties d'extrémités ayant une plus faible hauteur pour autoriser l'insertion du chassis de camion 5 et du chassis de remorque 8 sous les parties extrêmes 11 et 12 du chassis porte-charges 3.

Par exemple, la structure en col de cygne peut être réalisée de manière simple en utilisant des longerons 51 et 52 dont la section présente une hauteur relativement grande dans la zone centrale représentée par la coupe H-H en figure 9, et une hauteur relativement plus faible dans les zones d'extrémités représentées par la coupe G-G en figure 8.

Chacune des extrémités 11 et 12 du chassis porte-charge 3 comporte, en face inférieure, un pivot d'attelage respectivement 39 et 40 de type pivot d'attelage de semi-remorque. En outre, sur les faces latérales intérieures des longerons 51 et 52, on fixe, au voisinage des quatre extrémités des longerons, des pièces de coins 41 à 44 destinées à coopérer avec les verrous d'arrimage 27, 28, 36 et 37 décrits précédemment. Les écartements transversaux des verrous et des pièces de coins peuvent avantageusement être inférieurs à l'écartement des roues du camion, de sorte que les longerons et les pièces de coin passent entre les roues, et. le chassis peut être ainsi plus bas.

Dans le mode de réalisation représenté sur les figures 6 et 7, le chassis porte-charges 3 comporte en outre quatre jambes d'appui escamotables 45, 46, 47 et 48. Les jambes d'appui peuvent par exemple être disposées selon un écartement longitudinal de 6 mètres environ, et selon un écartement transversal de 2,80 mètres environ, fixées en bout de traverses solidaires des longerons. En position escamotée, représentée en traits mixtes sur les figures, le chassis amovible porte-charge 3 est porté par les deux berceaux d'accrochage 20 et 31 du dispositif. Par contre, en position déployée des jambes d'appui, représentée en traits pleins sur les figures 6 et 7, le chassis amovible porte-charges 3 repose sur le sol par ses quatre jambes d'appui 45 à 48. Avantageusement, le camion 1 et la remorque 2 sont dotés de suspensions hydropneumatiques à hauteur réglable. De cette manière, en position basse de la suspension, les berceaux d'accrochage 20 et 31 passent librement au-dessous du chassis amovible porte-charges 3 reposant sur ses jambes d'appui 45 à 48. Par contre, en position haute de la suspension hydropneumatique, les berceaux d'accrochage 20 et 31 soulèvent le chassis amovible porte-charges 3 et libèrent les jambes d'appui 45 à 48 que l'on peut alors replier en position escamotée.

Le chassis amovible porte-charges 3 peut en outre être doté, sur sa surface supérieure 38, de moyens d'accrochage et d'arrimage de conteneurs, par exemple des moyens habituellement utilises pour l'arrimage de caisses mobiles. Il peut également recevoir toute carrosserie destinée à contenir et/ou abriter des marchandises.

Le timon télescopique 4 est formé d'une succession d'éléments coulissant les uns dans les autres, et définissant une structure linéaire de longueur librement variable, présentant une rigidité suffisante pour conserver son caractère linéaire. De préférence, des butées de fin de course limitent la longueur du timon télescopique 4 endeçà d'une valeur maximale déterminée. En outre, des moyens de verrouillage déverrouillables, non représentés sur les figures, permettent de fixer par verrouillage la longueur du timon à une valeur déterminée. En position de verrouillage, le timon permet de tracter à vide la remorque 2 accrochée derrière le camion, en l'absence de chassis amovible porte-charges 3. En position déverrouillée, le timon a une longueur variable, par libre coulissement des éléments télescopiques les uns sur les autres, sa longueur s'adaptant en permanence à la longueur de la charge et à la distance variable entre la remorque 2 et le camion 1 lors de l'utilisation en virage. La remorque 2 se trouve alors tractée par le chassis amovible porte-charges 3.

La remorque 2 doit, de préférence, être dotée de moyens de freinage, et est reliée au camion 1 par des dispositifs de conduction d'énergie tels que des cables électriques ou des conduites hydropneumatiques. Les moyens de verrouillage de longueur de timon et les verrous d'arrimage peuvent être commandés par des moyens hydropneumatiques. L'invention est également compatible avec la disposition éventuelle de moyens moteurs entraînant l'un au moins des essieux de la remorque.

On comprend que le dispositif de la présente invention peut être actionné par un opérateur seul, qui peut le manoeuvrer seul et adapter ou enlever seul un chassis amovible porte-charges 3 supportant une charge.

L'un des intérêts de la présente invention est de permettre d'utiliser le même chassis amovible porte-charges 3 d'une part sur les moyens de transport routier qui ont été précédemment décrits, mais également sur des moyens de transport ferroviaire.

Dans sa version adaptée au transport ferroviaire, le dispositif de transport de charges longues selon l'invention comprend donc le même chassis amovible porte-charges 3, la structure auto-portante du chassis remplaçant le plateau de wagon. Le chassis amovible porte-charges 3 repose donc sur deux bogies par des berceaux rotatifs déverrouillables identiques à ceux décrits dans la version adaptée au transport routier.

On notera qu'il n'est pas nécessaire, dans le cas d'un transport sur rail, de relier les deux bogies par un timon, puisque les rails assurent le guidage des bogies.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour le transport de charges longues, comprenant, dans sa version adaptée au transport routier :
- un camion moteur (1) qui comporte un châssis (5) et au moins deux essieux (6, 7) dont au moins un essieu (7) est moteur, et qui comporte les éléments de commande et la source d'énergie,
- une première tourelle (18, 19) à axe de rotation sensiblement vertical (A - A) dont une partie inférieure (18) est fixée sur la partie arrière du châssis (5) de camion et dont la partie supérieure (19) tourillonne librement sur sa partie inférieure (18),
- une remorque (2) comportant au moins un essieu (9, 10),
- des moyens de liaison mécanique (4) pour relier le camion (1) et la remorque (2),
caractérisé en ce que :
- les moyens de liaison mécanique comprennent un timon (4) télescopique de longueur variable, fixé selon son extrémité postérieure (17) à la remorque (2) selon une fixation interdisant tout pivotement du timon par rapport à la remorque autour d'un axe vertical, et articulé à son extrémité antérieure (15) au châssis (5) de camion par un crochet d'attelage (16), de sorte que le timon (4) télescopique de longueur variable commande la direction de la remorque et autorise un libre écartement longitudinal de la remorque (2) par rapport au camion (1),
- la tourelle de camion (18, 19) porte un premier berceau d'accrochage (20) articulé sur la partie supérieure de tourelle (19) selon un axe de pivotement horizontal (C - C) destiné à être positionné transversalement par rapport à la direction générale de déplacement du dispositif,
- le premier berceau d'accrochage (20) comporte des moyens (23, 24, 25, 27, 28) pour recevoir et retenir la portion antérieure (11) d'un châssis amovible porte-charges (3),
- la remorque (2) comprend un second berceau d'accrochage (31) similaire au premier berceau d'accrochage (20), monté de manière similaire sur une seconde tourelle (29, 30) à axe de rotation sensiblement vertical (B - B) et muni de moyens (32-37) pour recevoir et retenir la portion postérieure (12) d'un châssis amovible porte-charges (3),
- un châssis amovible porte-charges (3) est porté et retenu respectivement à sa portion antérieure (11) par le premier berceau d'accrochage (20) et à sa portion postérieure (12) par le second berceau d'accrochage (31), de sorte que le châssis amovible porte-charges (3) assure lui-même la traction de la remorque (2) sans influer sur sa direction.

2. Dispositif selon la revendication 1, caractérisé en ce que la partie supérieure (19) de première tourelle de camion peut en outre admettre des mouvements d'oscillation latérale d'axe longitudinal et d'amplitude limitée (22) de part et d'autre du plan vertical longitudinal médian du dispositif par rapport à la partie inférieure (18) de tourelle, la seconde tourelle (29, 30) de remorque étant au contraire dépourvue de cette faculté d'oscillation latérale.

3. Dispositif selon l'une des revendications 1 ou 2, caractérisé en ce que la remorque (2) comprend au moins deux essieux (9, 10).

4. Dispositif selon l'une quelconque des revendications 1 à 3, caractérisé en ce que les moyens pour recevoir et retenir la portion d'extrémité de châssis amovible porte-charges (3) sur un berceau d'accrochage comprennent :
- une partie centrale de berceau d'accrochage (23, 32) conformée pour recevoir et retenir un pivot d'attelage (39, 40) solidaire du châssis amovible porte-charges,
- une première (24, 34) et une seconde (25, 35) parties latérales disposées transversalement de part et d'autre de la partie centrale (23, 32) et munies de moyens d'accrochage et de solidarisation (27, 28, 36, 37) du châssis amovible porte-charges (3).

5. Dispositif selon la revendication 4, caractérisé en ce que le berceau d'accrochage (20, 31) comporte une partie centrale (23, 32) conformée en sellette de tracteur de semi-remorque, prolongée latéralement par deux parties latérales (24, 25, 34, 35) comportant chacune un verrou d'arrimage vertical (27, 28, 36, 37) compatible avec une pièce de coin (41-44) solidaire du châssis amovible porte-charges (3).

6. Dispositif selon l'une quelconque des revendications 1 à 5, caractérisé en ce que le timon télescopique (4) comprend des moyens de verrouillage déverrouillables, pour fixer par verrouillage la longueur du timon à une valeur déterminée et permettre ainsi la traction à vide de la remorque (2) accrochée derrière le camion (1), et pour permettre par déverrouillage le libre coulissement des éléments télescopiques de timon et l'adaptation permanente de sa longueur en fonction de la longueur de la charge et en fonction du rayon de courbure de virage négocié par le dispositif.

7. Dispositif selon l'une quelconque des revendications 1 à 6, caractérisé en ce que le timon (4) comprend en outre des butées de fin de course limitant sa longueur en-deçà d'une valeur maximale déterminée.

8. Dispositif selon l'une quelconque des revendications 1 à 7, caractérisé en ce que le camion (1) et la remorque (2) sont dotés de suspensions hydropneumatiques à hauteur réglable, de sorte qu'en position basse de la suspension hydropneumatique, les berceaux d'accrochage (20, 31) passent librement au-dessous d'un châssis amovible porte-charges (3) reposant sur des jambes d'appui (45-48), et, en position haute de la suspension hydropneumatique, les berceaux d'accrochage (20, 31) soulèvent le châssis amovible porte-charges (3) et libèrent les jambes d'appui (45-48).

9. Dispositif selon l'une quelconque des revendications 1 à 8, caractérisé en ce que le châssis amovible porte-charges (3) forme une structure porteuse rigide allongée et est pourvu à ses deux extrémités (11, 12) de moyens d'accrochage (39-44) conformés pour coopérer avec des berceaux d'accrochage de camion (20) et de remorque (31) pour solidariser et désolidariser à volonté le châssis amovible porte-charges (3) et les berceaux d'accrochage (20, 31).

10. Dispositif selon la revendication 9, caractérisé en ce que le châssis amovible porte-charges (3) comprend un cadre rigide à structure en double col de cygne, avec une partie centrale de hauteur plus importante que les deux parties extrêmes antérieure (11) et postérieure (12), la partie supérieure de châssis formant une surface (38) sensiblement plane pour recevoir la charge.

11. Dispositif selon l'une des revendications 9 ou 10, caractérisé en ce que le châssis amovible porte-charges (3) est muni d'au moins 4 jambes d'appui escamotables (45-48) telles que, en position escamotée, le châssis (3) peut être porté par les berceaux d'accrochage (20, 31) du camion (20) et de la remorque (31) et, en position déployée, le châssis (3) repose sur le sol par les jambes d'appui (45-48).

12. Dispositif selon l'une quelconque des revendications 9 à 11, caractérisé en ce que le châssis amovible porte-charges (3) est muni de moyens d'accrochage de conteneurs sur sa surface supérieure (38), et peut recevoir toute carrosserie destinée a contenir et/ou abriter des marchandises.

## Claims

1. Device for transporting long loads, comprising, in its version adapted for road transport:
- a tractor unit (1) which comprises a chassis (5) and at least two axles (6,7), at least one of which axles (7) is a driving-axle, and comprises the control elements and the energy source,
- a first turret (18,19) with a substantially vertical axis of rotation (A-A), a lower section of which (18) is attached to the rear section of the tractor unit chassis (5) and whose upper section (19) pivots freely on its lower section (18),
- a trailer (2) comprising at least one axle (9,10),
- mechanical connection means (4) to connect the tractor unit (1) and the trailer (2),
characterised in that:
- the mechanical connection means comprise a variable length telescopic shaft (4), attached via its rear end (17) to the trailer (2) by a fixing mechanism which prevents any pivoting of the shaft in relation to the trailer around a vertical axis, and hinged at its front end (15) to the tractor unit chassis (5) by a coupling hook (16), in such a manner that the variable length telescopic shaft (4), controls the trailer direction and permits free longitudinal movement of the trailer (2) in relation to the tractor unit (1),
- the tractor unit turret (18,19) supports a first coupling cradle (20) hinged on the upper section of turret (19) along a horizontal pivoting axis (C-C) designed to be positioned transversely in relation to the general direction of movement of the device,
- the first coupling cradle (20) comprises means (23,24,25,27,28) to receive and hold the front portion (11) of a removable load-carrying chassis (3),
- the trailer (2) comprises a second coupling cradle (31) similar to the first coupling cradle (20), mounted in a similar manner on a second turret (29,30) with a substantially vertical axis of rotation (B-B) and provided with means (32-37) for receiving and holding the rear section (12) of a removable load-carrying chassis (3),
- a removable load-carrying chassis (3) is supported and held respectively at its front portion (11) by the first coupling cradle (20) and at its rear portion (12) by the second coupling cradle (31), in such a manner that the removable load-carrying chassis (3) itself provides traction to the trailer (2) without influencing its direction.

2. Device according to Claim 1, characterised in that the upper section (19) of the first tractor unit turret may, moreover, permit lateral oscillation movements in the longitudinal axis and of limited amplitude (22) on either side of the mean longitudinal vertical plane of the device in relation to the lower turret section (18), the second trailer turret (29,30), on the other hand, being deprived of this lateral oscillation facility.

3. Device according to either of Claims 1 or 2, characterised in that the trailer (2) comprises at least two axles (9,10).

4. Device according to any one of Claims 1 to 3, characterised in that the means for receiving and holding the end portion of the removable load-carrying chassis (3) on a coupling cradle comprise:
- a central coupling cradle section (23,32) formed to receive and hold a coupling swivel (39,40) integral with the removable load-carrying chassis,
- first (24,34) and second (25,35) lateral sections disposed transversely on either side of the central section (23,32) and provided with means of coupling and interlocking (27,28,36,37) of the removable load-carrying chassis (3).

5. Device according to Claim 4, characterised in that the coupling cradle (20,31) comprises a central section (23,32) formed as a semitrailer towing bolster, extended laterally by two lateral sections (24,25,34,35) each comprising a vertical fixing bolt (27,28,36,37) compatible with a corner piece (41-44) integral with the removable load-carrying chassis (3).

6. Device according to any one of Claims 1 to 5, characterised in that the telescopic shaft (4) comprises releasable bolt means to fix by bolting the shaft length at a set value and thereby permit empty haulage of the trailer (2) coupled behind the tractor unit (1), and to permit by unbolting free sliding of the telescopic elements of the shaft and permanent adaptation of its length as a function of the length of the load and as a function of the turning radius of curvature negotiated by the device.

7. Device according to any one of Claims 1 to 6, characterised in that the shaft (4) furthermore comprises end of stroke stops restricting its length to within a maximum set value.

8. Device according to any one of Claims 1 to 7, characterised in that the tractor unit (1) and the trailer (2) are provided with hydropneumatic height adjustable suspensions, such that in the low position of the hydropneumatic suspension, the coupling cradles (20,31) pass freely below a removable load-carrying chassis (3) resting on support legs (45-48), and, in the high position of the hydropneumatic suspension, the coupling cradles (20,31) raise the removable load-carrying chassis (3) and free the support legs (45-48).

9. Device according to any one of Claims 1 to 8, characterised in that the removable load-carrying chassis (3) forms a rigid extended support structure and is provided at both its ends (11,12) with coupling means (39-44) formed so as to co-operate with the coupling cradles of the tractor unit (20) and of the trailer (31) to engage and disengage at will the removable load-carrying chassis (3) and the coupling cradles (20,31).

10. Device according to Claim 9, characterised in that the removable load-carrying chassis (3) comprises a rigid frame with a double swan-neck structure, with a central section higher than the two extreme front sections (11) and rear sections (12), the upper chassis section forming a substantially flat surface (38) to receive the load.

11. Device according to either of Claims 9 or 10, characterised in that the removable load-carrying chassis (3) is provided with at least 4 retractable support legs (45-48), such that, in the retracted position, the chassis (3) can be supported by the coupling cradles (20,31) of the tractor unit (20) and of the trailer (31) and, in the deployed position, the chassis (3) rests on the ground by the support legs (45-48).

12. Device according to any one of Claims 9 to 11, characterised in that the removable load-carrying chassis (3) is provided with container coupling means on its upper surface (38), and can receive any type of bodywork designed to contain and/or house goods.

## Patentansprüche

1. Vorrichtung für den Transport von langen Lasten, welche in ihrer für den Straßentransport angepaßten Version besteht aus:
- einem Lastfahrzeug (1) mit Motor, welches ein Gestell (5) und wenigstens zwei Radachsen (6, 7) aufweist, von denen wenigstens eine Achse (7) eine Antriebsachse ist, und welches die Antriebselemente und die Energiequelle aufweist,
- einem ersten Drehaufsatz (18, 19) mit einer im wesentlichen vertikalen Drehachse (A - A), von welchem ein unterer Teil (18) auf dem hinteren Teil des Gestells (5) des Lastfahrzeuges befestigt ist und von welchem der obere Teil (19) frei auf seinem unteren Teil (18) dreht,
- einem Anhänger (2), der wenigstens eine Achse (9, 10) aufweist,
- mechanischen Verbindungsmitteln (4) zum Verbinden des Lastfahrzeuges (1) und des Anhängers (2),
dadurch gekennzeichnet, daß:
- die mechanischen Verbindungsmittel eine Teleskopdeichsel (4) mit veränderlicher Länge aufweisen, welche mit ihrem hinteren Ende (17) an dem Anhänger (2) mit einer Befestigung befestigt ist, die jedes Schwenken der Deichsel um eine vertikale Achse in Bezug auf den Anhänger verbietet, und die mit ihrem vorderen Ende (15) an dem Gestell (5) des Lastfahrzeuges durch einen Zughaken (16) derart gelenkig verbunden ist, daß die Teleskopdeichsel (4) mit veränderlicher Länge die Richtung des Anhängers steuert und eine freie Entfernung des Anhängers (2) in der Längsrichtung in Bezug auf den Lastfahrzeug (1) ermöglicht,
- der Drehaufsatz (18, 19) des Lastfahrzeuges ein erstes Mitnahmegestell (20) trägt, welches an dem oberen Teil (19) des Drehaufsatzes mit einer horizontalen Schwenkachse (C - C) gelenkig verbunden ist, die für eine Anordnung in der Querrichtung in Bezug auf die generelle Versatzrichtung der Vorrichtung bestimmt ist,
- das erste Mitnahmegestell (20) Mittel (23, 24, 25, 27, 28) zur Aufnahme und zum Halten des vorderen Teils (11) eines auswechselbaren lasttragenden Gestells (3) aufweist,
- der Anhänger (2) ein zweites Mitnahmegestell (31) ähnlich dem ersten Mitnahmegestell (20) aufweist, welches in ähnlicher Art und Weise auf einem zweiten Drehaufsatz (29, 30) mit einer im wesentlichen vertikalen Drehachse (B - B) befestigt und mit Mitteln (32-37) zur Aufnahme und zum Halten des hinteren Teils (12) eines auswechselbaren lasttragenden Gestells (3) versehen ist,
- ein auswechselbares lasttragendes Gestell (3) mit seinem vorderen Teil (11) durch das erste Mitnahmegestell (20) und mit seinem hinteren Teil (12) durch das zweite Mitnahmegestell (31) derart getragen und gehalten ist, daß das auswechselbare lasttragende Gestell (3) für sich selbst das Ziehen des Anhängers (2) ohne eine Beeinflussung seiner Richtung sicherstellt.

2. Vorrichtung nach Anspruch 1, dadurch gekennzeichnet, daß der obere Teil (19) des ersten Drehaufsatzes des Lastfahrzeuges außerdem Schwingbewegungen (22) seitwärts von der Längsachse und mit begrenzter Amplitude in Bezug auf den unteren Teil (18) des Drehaufsatzes nach der einen und nach der anderen Seite der vertikalen Längsmittelebene der Vorrichtung zulassen kann, wobei der zweite Drehaufsatz (29, 30) des Anhängers im Gegensatz dazu nicht mit dieser Möglichkeit einer Seitwärtsschwingung versehen ist.

3. Vorrichtung nach einem der Ansprüche 1 oder 2, dadurch gekennzeichnet, daß der Anhänger (2) wenigstens zwei Radachsen (9, 10) aufweist.

4. Vorrichtung nach einem der Ansprüche 1 bis 3, dadurch gekennzeichnet, daß die Mittel zur Aufnahme und zum Halten des äußersten Teils des auswechselbaren lasttragenden Gestells (3) auf einem Mitnahmegestell bestehen aus:
- einem Mittelteil (23, 32) des Mitnahmegestells, welcher für die Aufnahme und das Halten eines Zugzapfens (39, 40) angepaßt ist, der mit dem auswechselbaren lasttragenden Gestell (3) fest verbunden ist,
- einem ersten (24, 34) und einem zweiten (25, 35) Teil, die zu dem Mittelteil (23, 32) in Querrichtung seitwärts zu der einen Seite und zu der anderen Seite angeordnet und mit Einhäng- und Befestigungsmitteln (27, 28, 36, 37) des auswechselbaren lasttragenden Gestells (3) versehen sind.

5. Vorrichtung nach Anspruch 4, dadurch gekennzeichnet, daß das Mitnahmegestell (20, 31) einen Mittelteil (23, 32) aufweist, der an den Sattel eines Sattelschleppers angepaßt und nach der Seite durch zwei seitliche Teile (24, 25, 34, 35) verlängert ist, die jeweils einen vertikalen Kopplungsriegel (27, 28, 36, 37) aufweisen, der mit einem Eckstück (41-44) zusammenpaßt, welches mit dem auswechselbaren lasttragenden Gestell (3) verbunden ist.

6. Verfahren nach einem der Ansprüche 1 bis 5, dadurch gekennzeichnet, daß die Teleskopdeichsel (4) entriegelbare Verriegelungsmittel aufweist, um durch eine Verriegelung die Deichsellänge auf einen bestimmten Wert festzustellen und so das Ziehen des leeren Anhängers (2) zu erlauben, der hinter das Lastfahrzeug (1) eingehängt ist, und um durch ein Entriegeln die freie Verschiebung der Teleskopelemente der Deichsel und die ständige Anpassung ihrer Länge in Abhängigkeit von der Länge der Last und in Abhängigkeit von dem Krümmungshalbmesser der Schwenkung zu erlauben, welche durch die Vorrichtung vermittelt wird.

7. Vorrichtung nach einem der Ansprüche 1 bis 6, dadurch gekennzeichnet, daß die Deichsel (4) außerdem Bewegungsendanschläge aufweist, die ihre Länge auf einen bestimmten maximalen Wert begrenzen.

8. Vorrichtung nach einem der Ansprüche 1 bis 7, dadurch gekennzeichnet, daß das Lastfahrzeug (1) und der Anhänger (2) mit hydropneumatischen Aufhängungen mit einer solchen einstellbaren Höhe ausgestattet sind, daß in der unteren Position der hydropneumatischen Aufhängung die Mitnahmegestelle (20, 31) frei unterhalb eines auswechselbaren lasttragenden Gestells (3) hindurchgehen können, welches auf Stützbeinen (45-48) ruht, und daß die Mitnahmegestelle (20, 31) in der oberen Position der hydropneumatischen Aufhängung das auswechselbare lasttragende Gestell (3) anheben und die Stützbeine (45-48) freisetzen.

9. Vorrichtung nach einem der Ansprüche 1 bis 8, dadurch gekennzeichnet, daß das auswechselbare lasttragende Gestell (3) eine langgestreckte starre Tragkonstruktion ausbildet und an seinen beiden äußersten Enden (11, 12) mit Einhängmitteln (39-44) versehen ist, die für ein Zusammenwirken mit den Mitnahmegestellen (20, 31) des Lastfahrzeuges und des Anhängers für ein willkürliches Verbinden und Lösen des auswechselbaren lasttragenden Gestells (3) und der Mitnahmegestelle (20, 31) angepaßt sind.

10. Vorrichtung nach Anspruch 9, dadurch gekennzeichnet, daß das auswechselbare lasttragende Gestell (3) einen starren Rahmen mit einer doppelt gekröpften Struktur aufweist, mit einem Mittelteil, der eine wichtigere Höhe hat als die beiden vorderen (11) und hinteren (12) Endteile, wobei der obere Teil des Gestells eine Oberfläche (38) ausbildet, die zur Aufnahme der Last im wesentlichen eben ist.

11. Vorrichtung nach einem der Ansprüche 9 oder 10, dadurch gekennzeichnet, daß das auswechselbare lasttragende Gestell (3) mit wenigstens vier derart einziehbaren Stützbeinen (45-48) versehen ist, daß das Gestell (3) in der eingezogenen Position durch die Mitnahmegestelle (20, 31) des Lastfahrzeuges (20) und des Anhängers (31) getragen werden kann und das Gestell (3) in der ausgefahrenen Position durch die Stützbeine (45-48) auf dem Erdboden ruht.

12. Vorrichtung nach einem der Ansprüche 9 bis 11, dadurch gekennzeichnet, daß das auswechselbare lasttragende Gestell (3) an seiner oberen Oberfläche (38) mit Container-Einhängmitteln versehen ist und den gesamten Karosserieaufbau aufnehmen kann, der für eine Aufnahme und/oder eine Unterbringung von Waren bestimmt ist.
